# EUROPEAN PATENT SPECIFICATION

(11) **EP 2 899 833 B1**
(45) Date of publication and mention of the grant of the patent: **11.03.2020**
(21) Application number: 12885154.0
(22) Date of filing: 18.09.2012
(51) Int. Cl.: H02J 7/00, G01W 1/08

(54) **RADIOSONDE POWER SOURCE DEVICE AND RADIOSONDE**
STROMQUELLENVORRICHTUNG FÜR RADIOSONDE UND RADIOSONDE
DISPOSITIF D'ALIMENTATION ÉLECTRIQUE DE RADIOSONDE, ET RADIOSONDE

(43) Date of publication of application: 29.07.2015
(73) Proprietor: Meisei Electric Co., Ltd., Gunma 372-8585 (JP)
(72) Inventor: SHIMIZU, Kensaku, Isesaki-shi Gunma 372-8585 (JP)
(74) Representative: Kolster Oy Ab
(86) International application number: PCT/JP2012/005941
(87) International publication number: WO 2014/045315

(56) References cited:
- GB-A- 2 309 360
- JP-A- H01 206 422
- JP-A- H01 206 422
- JP-A- H08 307 150
- JP-A- H10 174 286
- JP-U- H0 618 959
- US-A1- 2004 105 198
- WELLS E: "INTEGRATED BOOST CONTROLLER EXTENDS ALKALINE USAGE", ELECTRONIC DESIGN, PENTON MEDIA, CLEVELAND, OH, US, vol. 45, no. 25, 17 November 1997 (1997-11-17), page 54, XP001031538, ISSN: 0013-4872

## Description

### Technical Field

The present invention relates to a power source device mounted on a radiosonde which is flown on a balloon to make meteorological observations in the upper air.

### Background Art

A radiosonde for observing the upper atmosphere measures a wind direction, wind speed, atmospheric pressure, temperature, and humidity in the upper atmosphere, and transmits measurement information to the ground by using a transmitter . A water-activated battery has conventionally been used as a main power source of a power source device for driving the equipment of the radiosonde. The reason is that the water-activated battery suitably satisfies requirements such as having a sufficient voltage (approximately 5 V to 12 V) to operate the transmitter of the radiosonde, being operable at surface temperatures and in extremely low temperature environments of near -90°C up in the air, and having a weight light enough to be flown on a rubber balloon.

By the way, the water-activated battery with high self-heating was less likely to cause a voltage drop and could supply sufficient voltage even in extremely low temperature environments. However, the water-activated battery has sometimes caused operational inconvenience because its operation cannot be stopped once water is injected.

For such a reason, the use of dry cells has been becoming mainstream in recent years as a power source battery of the radiosonde power source, as disclosed in the patent application JP-H08 307150.

Dry cells typically have a rated voltage of 1.5 V or 3.0 V per cell. For use with a radiosonde, a plurality of dry cells are connected in series to obtain a predetermined voltage.

However, if a plurality of dry cells are used in the power source unit of the radiosonde, the power source device increases in weight. The balloon also becomes larger in volume, and the gas volume of hydrogen gas or the like filled into the balloon increases to increase the cost needed for a release.

If manganese or alkali dry cells are used, the aqueous electrolyte solution inside can freeze and cause a voltage drop in low temperature environments . The dry cells have thus been covered with heat insulators for antifreeze measures.

Dry cells containing a nonaqueous electrolyte solution, such as a lithium battery, are operable at relatively low temperatures and thus do not need heat insulators as antifreeze measures. To obtain a high voltage, a plurality of such dry cells nevertheless need to be connected in series like alkali dry cells.

Each lithium cell has an electric capacity too large to consume within the observation time of a radiosonde, which is approximately two to three hours. The use of a plurality of lithium batteries connected in series translates into mounting an electric capacity more than necessary, resulting in wasted cost.

The document "Integrated Boost Controller Extends Alkaline Usage", Electronic Design, 17.11.1997, XP-1031538 discloses the use of a step-up circuit to increase the voltage of a dry cell and to thereby make exploitable its full range.

### Summary of Invention

### Technical Problem

An object of the present invention is to provide a radiosonde power source device of which weight can be reduced even if a dry cell is used as a power source battery, which can supply a necessary voltage with a battery capacity corresponding to an observation time, and which can generate a predetermined electromotive force in extremely low temperature environments, and a radiosonde. Solution to Problem

A radiosonde power source device for solving the problem of the present invention is a radiosonde power source device for supplying driving power to an apparatus that processes and transmits observation information obtained by meteorological observations in the upper atmosphere, as defined in the independent claim 1.

In the foregoing configuration, the dry cell is a lithium battery or an assembled battery of lithium batteries.

In the foregoing configuration, the step-up power source circuit is a DC-DC converter.

In the foregoing configuration, the radiosonde power source device includes a regulator that steps down a step-up voltage of the step-up power source circuit to a voltage higher than the voltage of the dry cell; the apparatus includes an internal circuit unit that processes observation information from a sensor unit for making meteorological observations in the upper atmosphere and a transmission unit that transmits information processed by the internal circuit unit; and the radiosonde power supply device supplies the step-up voltage of the step-up power source circuit to the transmission unit and a step-down voltage of the regulator to the internal circuit unit.

A configuration of a radiosonde for solving the problem of the present invention includes: the radiosonde power source device having the foregoing configuration; a sensor unit to which the power source device supplies power and that makes meteorological observations in the upper atmosphere; an apparatus that processes and transmits observation information observed by the sensor unit; and a container that accommodates the power source device and the apparatus.

### Advantageous Effects of Invention

According to the radiosonde power source apparatus of the present invention, the step-up power source circuit such as a step-up DC-DC converter steps up the voltage of the dry cell to a predetermined voltage. The radiosonde can thus perform observations, for example, with the electric capacity of one dry cell. The number of dry cells can be significantly reduced to allow a significant reduction in the weight of the radiosonde.

Consequently, the balloon can be made smaller in size and the volume of the hydrogen gas to be filled into the balloon can be significantly reduced. This can significantly reduce the cost needed for a release.

Moreover, even if the radiosonde falls on the ground after the end of the observations, the lighter weight of the radiosonde significantly reduces risks when falling on the ground.

Since the dry cell is connected to the step-up power source circuit such as a step-up DC-DC coverer, the dry cell causes self-heating. As the ambient temperature decreases, the current of the dry cell increases to increase the self-heating temperature. Consequently, as the altitude increases, the ambient temperature decreases and the voltage of the dry cell drops temporarily, but the increase of the self-heating temperature alleviates the voltage drop to maintain a generally constant voltage. A stable voltage can thus be supplied.

### Brief Description of Drawings

FIG. 1 is a block diagram of an electric circuit, showing an embodiment of a radiosonde according to the present invention.
FIG. 2 is a block diagram showing a first embodiment of a power source device of the radiosonde shown in FIG. 1.
FIG. 3 is a block diagram showing another power source device of the radiosonde shown in FIG. 1.
FIG. 4 is a circuit diagram of a step-up power source circuit shown in FIGs. 2 and 3.
FIG. 5 is a diagram showing a relationship between a voltage of the dry cell shown in FIG. 4 and a change in ambient temperature, in relation to self-heating temperature.

### Description of Embodiments

Hereinafter, the present invention will be described in detail on the basis of embodiments shown in the drawings.

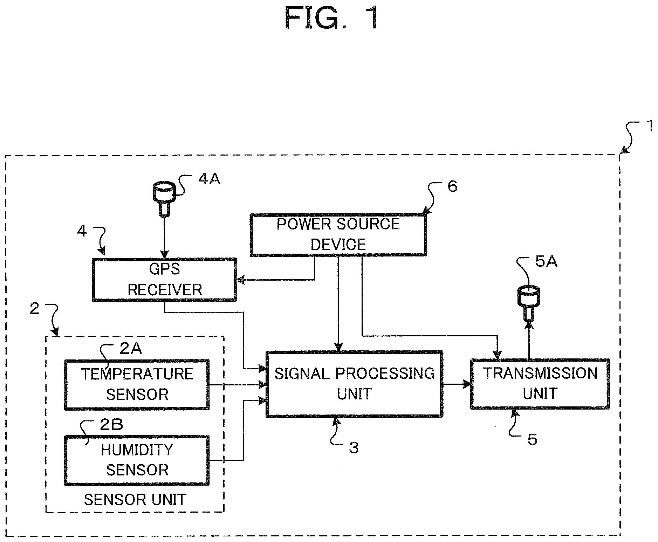

FIG. 1 is a block diagram of an electric circuit, showing an embodiment of a radiosonde according to the present invention.

In FIG. 1, a radiosonde 1 to be flown on a balloon outputs detection information detected by a temperature sensor 2A and a humidity sensor 2B of a sensor unit 2 to a signal processing unit 3. A GPS (Global Positioning System) receiver 4 outputs position information obtained from a GPS antenna 4A to the signal processing unit 3. The signal processing unit 3 outputs the received various types of observation information to a transmission unit 5, and transmits the observation information from a transmission antenna 5A to a reception facility on the ground.

In the present embodiment, a wind direction, wind speed, and atmospheric pressure are measured on the basis of a moving speed and an altitude obtained by the GPS. The radiosonde according to the present invention is not limited to such a configuration.

A power source device 6 supplies the signal processing unit 3, the GPS receiver 4, and the transmission unit 5 with power at predetermined voltages.

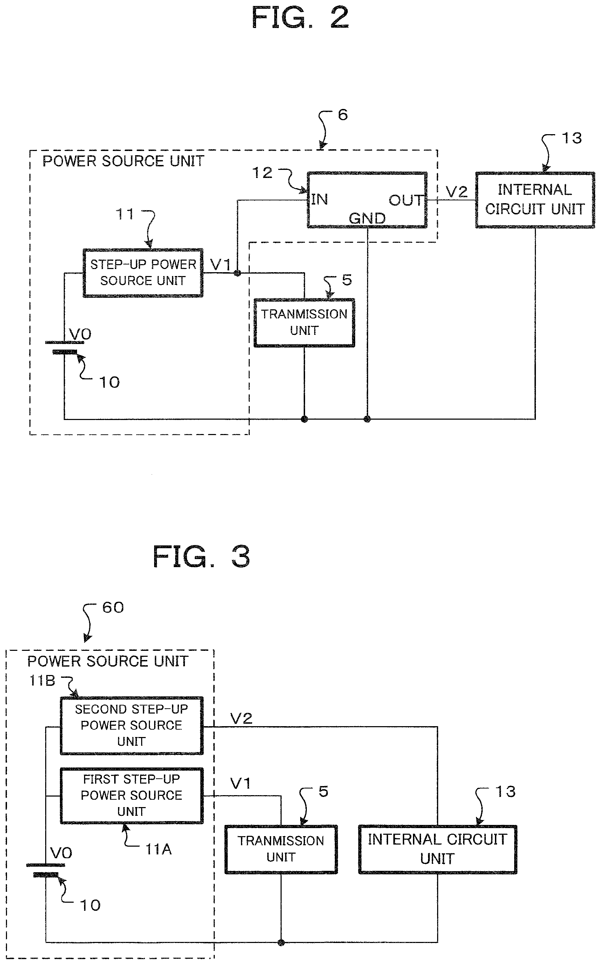

As shown in FIG. 2, the power source device 6 uses a dry cell 10 having a voltage V0 as a power source. A step-up power source circuit 11 such as a DC-DC converter steps up the voltage V0 of the dry cell 10 to obtain a voltage V1 higher than the voltage V0 (V0 < V1). The transmission unit 5 is driven by the voltage V1 stepped up by the step-up power source circuit 11. An internal circuit unit 13 (the signal processing unit 3 and the GPS receiver 4) has a driving voltage V2 lower than the driving voltage V1 of the transmission unit 5 (V2 < V1). The voltage V1 stepped up by the step-up power source circuit 11 is then stepped down to the voltage V2 by a three-terminal regulator 12, and the voltage V2 is supplied to the internal circuit unit 13.

A lithium battery having a nominal rating of 1.5 V or 3.0 V or an assembled battery of lithium batteries is used as the dry cell 10 of the power source device 6. The step-up power source circuit 11 steps up the voltage V0 of the dry cell 10 to a primary voltage V1 of approximately 5 V to 12 V.

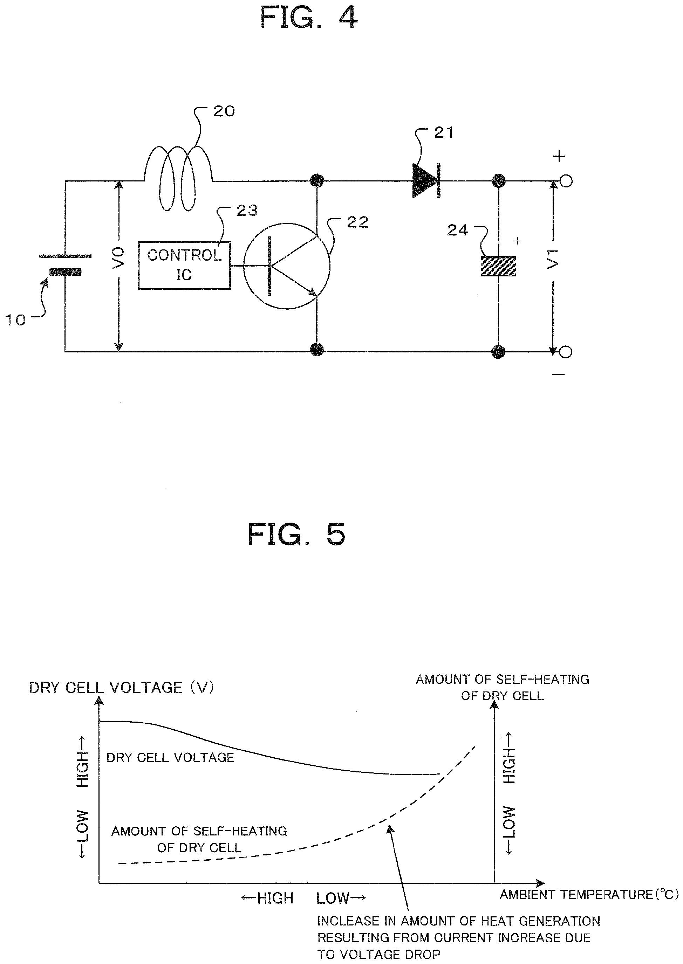

Examples of the step-up power source circuit 11 may include a non-insulated DC-DC converter shown in FIG. 4. In the DC-DC converter, when a switching transistor 22 which is ON-OFF controlled by a control IC is turned ON, all the current from the dry cell 10 flows through a choke coil 20. The choke coil 20 produces an electromotive force in the direction of blocking the current flowing in, and thereby accumulates energy. Next, when the switching transistor 22 is turned OFF, the choke coil 20 produces an electromotive force in the direction of sustaining the current, and thereby releases the accumulated energy. This generates a high induction voltage across the choke coil 20. A capacitor 24 is charged with a voltage obtained by adding the voltage of the dry cell 10 to the induction voltage. Here, a diode 21 prevents the voltage with which the capacitor 24 is charged from flowing backward to the dry cell 10.

The DC-DC converter is configured such that the choke coil 20, the diode 21, the switching transistor 22, the control IC 23, and the capacitor 24 are mounted on a printed-circuit board. The DC-DC converter according to the present embodiment has a weight of approximately 5 g to 10 g. The dry cell 10 has a weight of approximately 15 g to 30 g.

Here, without using the DC-DC converter, in order to obtain a primary voltage V1, it must be connected to a series of three dry cells 10. Further, in order to drive the internal circuit 13, a structure that uses a 3-terminal regulator 12. As compared to such a conventional configuration, the configuration of the first embodiment differs in that the number of dry cells 10 is two fewer and the DC-DC converter is added. The dry cell 10 have a weight of approximately 15 g per cell. The DC-DC converter has a weight of approximately 5 g.

Consequently, the power source device 6 according to the present embodiment can employ the DC-DC converter to reduce weight by approximately 30 g as compared to the conventional configuration.

The radiosonde 1 according to the present embodiment has a total weight of approximately 110 g. The weight reduction of approximately 30 g therefore allows a significant reduction in the weight of the radiosonde 1.

The lithium battery used as the dry cell 10 has an electric capacity of approximately three hours per cell. The series connection of three cells increases the electric capacity three times. However, since the observation time of the radiosonde 1 is approximately two to three hours, a single lithium battery will suffice in terms of the electric capacity.

According to the present embodiment, the voltage obtained by connecting a plurality of dry cells in series can be obtained by using one dry cell 10 and the step-up power source circuit 11 being the DC-DC converter. Consequently, the power source batteries which have accounted for a large proportion of the total weight of the radiosonde can be reduced. The newly-added step-up power source circuit causes only a slight increase in weight. The radiosonde can perform observations by using the one dry cell 10, and can be significantly reduced in weight.

The weight reduction of the radiosonde can make the balloon smaller in volume, and allows a significant reduction in the amount of hydrogen gas or the like to be filled into the balloon. This can significantly reduce the cost needed for a release.

In the step-up DC-DC converter, as shown in FIG. 4, when the switching transistor 22 is ON, both ends of the choke coil 20 are connected to both ends of the dry cell 10 and the current flows through the choke coil 20. The dry cell 10 thereby causes self-heating due to the internal resistance of the dry cell 10.

As the released radiosonde 1 rises and increases in altitude, the ambient temperature starts to decrease. FIG. 5 is a diagram showing a relationship between the voltage of the dry cell and a change in the ambient temperature, in relation to the amount of self-heating (increase in the amount of heat generation resulting from a current increase due to a drop in voltage) of the dry cell. The voltage of the dry cell starts to drop as the the ambient temperature decreases . The voltage drop of the dry cell 10, however, increases the current to flow through the choke coil 20. The amount of heat generation of the dry cell 10 resulting from the current increase due to the voltage drop increases, and the heating temperature of the dry cell 10 becomes higher. The higher heating temperature of the dry cell 10 suppresses the tendency for the electromotive force to decrease. A generally constant voltage is thus maintained even if the radiosonde 1 increases in altitude and the ambient temperature falls.

According to the present embodiment, the step-up DC-DC converter can be used to make the dry cell 10 cause self-heating because of a current increase due to a voltage drop by consumption. A decrease of the electromotive force in extremely low temperature environments can thus be suppressed without using a heat insulating member. Since no heat insulating member is needed, the radiosonde can be reduced in weight.

The radiosonde of lighter weight can significantly reduce risks when falling on the ground.

The circuit board and the battery of the radiosonde 1 are accommodated in a not-shown container. Various antennas are supported and extended outward from the container. The container is connected to, for example, a hydrogen gas-filled balloon via a string and released.

FIG. 3 is a block diagram showing a different power source device of the radiosonde shown in FIG. 1.

In the first embodiment shown in FIG. 2, the regulator 12 is used to drive the internal circuit unit 13. In the present circuit a voltage V2 stepped up by a second step-up power source circuit 11B having the same configuration as that of the step-up power source circuit 11 is supplied to the internal circuit 13. A voltage V1 stepped up by a first step-up power source circuit 11A having the same configuration as that of the step-up power source circuit 11 is supplied to the transmission unit 5

In the present circuit, the voltage V0 of one dry cell 10 is stepped up to the voltages V1 and V2 (V2 < V1) by the first step-up power source circuit 11A and the second step-up power source circuit 11B, respectively. If there is provided a circuit unit to be driven by a voltage different from the voltages V1 and V2, a new step-up power source circuit may be added to supply a voltage V3. The number of step-up source circuits 11 is not limited to two.

### Industrial Applicability

The radiosonde power source device according to the present invention can be configured by mounting an IC and a choke coil on a printed-circuit board. The radiosonde power source device can be integrally assembled with the printed-circuit board of the transmission unit and the internal circuit of the radiosonde. The radiosonde is hung on a balloon filled with hydrogen gas, and released to make meteorological observations in the upper atmosphere. Reference Signs List

1 radiosonde
2 sensor unit
3 signal processing unit
4 GPS receiver
5 transmission unit
6, 60 power source device
10 dray cell
11 step-up power source circuit
   11A first step-up power source circuit, 11B second step-up power source circuit
12 regulator
13 internal circuit unit
20 choke coil
21 diode
22 switching transistor
23 control IC
24 capacitor

## Claims

1. A radiosonde power source device (6,60) configured to supply driving power to an apparatus (3,5) that processes and transmits observation information obtained by meteorological observations in the upper atmosphere, the radiosonde power source device (6,60) comprises:
a dry cell (10) that has a rated voltage lower than driving voltage of the apparatus (3,5) **characterized in that**
the dry cell is a lithium battery or an assembled battery of lithium batteries; and
**in that** the radiosonde power source device (6, 60) further comprises
a step-up power source circuit (11) configured to step up the voltage of the dry cell (10) to a predetermined voltage,
a regulator (12) that is connected to the step-up power source circuit (11) and configured to step down a step-up voltage of the step-up power source circuit (11),
wherein the apparatus includes an internal circuit unit (13) that is connected to the regulator (12) and is configured to process observation information from a sensor unit (2,2A,2B) configured to make meteorological observations in the upper atmosphere, and a transmission unit (3) that is connected to the step-up power source circuit (11) and configured to transmit information processed by the internal circuit unit (13), and
wherein the transmission unit (3) is configured to operate when receiving the step-up voltage of the step-up power source circuit (11), and the internal circuit unit (13) is configured to operate when receiving a step-down voltage of the regulator (12).

2. The radiosonde power source device (6,60) according to claim 1, wherein the step-up power source circuit (11) is a non-insulated DC-DC converter including a switching transistor (22), a choke coil (20), a capacitor (24) and a diode (21),
wherein the capacitor (24) is configured to be charged by a voltage obtained by adding the dry cell voltage to the induction voltage of the choke coil (20),
wherein the diode (21) is connected between the capacitor (24) and the choke coil (20) and configured to prevent the voltage with which the capacitor (24) is charged from flowing backward to the dry cell (10),
wherein the dry cell (10), the switching transistor (22) and the capacitor (24) are connected to a common reference potential,
wherein, when the switching transistor (22) is turned ON, the choke coil (20) produces an electromotive force in a direction of blocking current flowing in, and
when the switching transistor (22) is turned OFF, the choke coil (20) produces an electromotive force in a direction of sustaining the current.

3. A radiosonde (1) comprising: the radiosonde power source device (6,60) as set forth in claim 1; a sensor unit (2,2A,2B) to which the power source device (6,60) supplies power and that is configured to make meteorological observations in the upper atmosphere;
an apparatus (3,5) that is configured to process and transmit observation information observed by the sensor unit (2,2A,2B); and a container that accommodates the power source device (6,60) and the apparatus (3,5).

## Patentansprüche

1. Radiosondenleistungsquellenvorrichtung (6, 60), die dazu ausgelegt ist, einer Einrichtung (3, 5), die Beobachtungsinformationen, die durch meteorologische Beobachtungen in der oberen Atmosphäre erhalten werden, verarbeitet und überträgt, Antriebsleistung zuzuführen, wobei die Radiosondenleistungsquellenvorrichtung (6, 60) Folgendes umfasst:
eine Trockenzelle (10), die eine Nennspannung aufweist, die niedriger ist als die Antriebsspannung der Einrichtung (3, 5), **dadurch gekennzeichnet, dass** die Trockenzelle eine Lithiumbatterie oder eine zusammengesetzte Batterie aus Lithiumbatterien ist; und
dadurch, dass die Radiosondenleistungsquellenvorrichtung (6, 60) ferner eine Aufwärtsleistungsquellenschaltung (11) umfasst, die dazu ausgelegt ist, die Spannung der Trockenzelle (10) auf eine vorbestimmte Spannung zu erhöhen,
einen Regler (12), der mit der Aufwärtsleistungsquellenschaltung (11) verbunden und dazu ausgelegt ist, eine erhöhte Spannung der Aufwärtsleistungsquellenschaltung (11) zu verringern,
wobei die Einrichtung eine interne Schaltungseinheit (13), die mit dem Regler (12) verbunden und dazu ausgelegt ist, Beobachtungsinformationen von einer Sensoreinheit (2, 2A, 2B), die dazu ausgelegt ist, meteorologische Beobachtungen in der oberen Atmosphäre zu machen, zu verarbeiten, und eine Übertragungseinheit (3), die mit der Aufwärtsleistungsquellenschaltung (11) verbunden und dazu ausgelegt ist, Informationen, die von der internen Schaltungseinheit (13) verarbeitet werden, zu übertragen, beinhaltet, und
wobei die Übertragungseinheit (3) dazu ausgelegt ist, betrieben zu werden, wenn sie die erhöhte Spannung der Aufwärtsleistungsquellenschaltung (11) empfängt, und die interne Schaltungseinheit (13) dazu ausgelegt ist, betrieben zu werden, wenn sie eine verringerte Spannung des Reglers (12) empfängt.

2. Radiosondenleistungsquellenvorrichtung (6, 60) nach Anspruch 1, wobei die Aufwärtsleistungsquellenschaltung (11) ein nicht isolierter DC-DC-Wandler ist, der einen Schalttransistor (22), eine Drosselspule (20), einen Kondensator (24) und eine Diode (21) beinhaltet,
wobei der Kondensator (24) dazu ausgelegt ist, von einer Spannung geladen zu werden, die durch Hinzufügen der Trockenzellenspannung zur Induktionsspannung der Drosselspule (20) erhalten wird,
wobei die Diode (21) zwischen dem Kondensator (24) und der Drosselspule (20) verbunden und dazu ausgelegt ist zu verhindern, dass die Spannung, mit der der Kondensator (24) geladen wird, zurück zur Trockenzelle (10) fließt,
wobei die Trockenzelle (10), der Schalttransistor (22) und der Kondensator (24) mit einem gemeinsamen Referenzpotenzial verbunden sind,
wobei, wenn der Schalttransistor (22) eingeschaltet ist, die Drosselspule (20) eine elektromotorische Kraft in einer Richtung produziert, in der hineinfließender Strom blockiert wird, und
wenn der Schalttransistor (22) ausgeschaltet ist, die Drosselspule (20) eine elektromotorische Kraft in einer Richtung produziert, in der der Strom aufrechterhalten wird.

3. Radiosonde (1), die Folgendes umfasst: eine Radiosondenleistungsquellenvorrichtung (6, 60) wie in Anspruch 1 erläutert; eine Sensoreinheit (2, 2A, 2B), der die Leistungsquellenvorrichtung (6, 60) Leistung zuführt und die dazu ausgelegt ist, meteorologische Beobachtungen in der oberen Atmosphäre zu machen;
eine Einrichtung (3, 5), die dazu ausgelegt ist, Beobachtungsinformationen, die von der Sensoreinheit (2, 2A, 2B) beobachtet werden, zu verarbeiten und zu übertragen; und einen Behälter, der die Leistungsquellenvorrichtung (6, 60) und die Einrichtung (3, 5) aufnimmt.

## Revendications

1. Dispositif de source de puissance de radiosonde (6, 60) configuré pour fournir la puissance de commande à un appareil (3, 5) qui traite et transmet des informations d'observation obtenues par des observations météorologiques dans la haute atmosphère, dans lequel le dispositif de source de puissance de radiosonde (6, 60) comprend :
une pile sèche (10) qui a une tension assignée inférieure à la tension de commande de l'appareil (3, 5), **caractérisé en ce que** la pile sèche est une batterie au lithium ou une batterie assemblée de batteries au lithium ; et
**en ce que** le dispositif de source de puissance de radiosonde (6, 60) comprend en outre un circuit de source d'alimentation élévateur (11) configuré pour élever la tension de la pile sèche (10) à une tension prédéterminée,
un régulateur (12) qui est connecté au circuit de source d'alimentation élévateur (11) et configuré pour abaisser une tension d'élévation du circuit de source d'alimentation élévateur (11),
dans lequel l'appareil comprend une unité de circuit interne (13) qui est connectée au régulateur (12) et qui est configurée pour traiter les informations d'observation qui proviennent d'une unité de capteur (2, 2A, 2B) configurée pour effectuer des observations météorologiques dans la haute atmosphère, et une unité de transmission (3) qui est connectée au circuit de source d'alimentation élévateur (11) et configurée pour transmettre les informations traitées par l'unité de circuit interne (13), et
dans lequel l'unité de transmission (3) est configurée pour fonctionner lors de la réception de la tension d'élévation du circuit de source d'alimentation élévateur (11), et l'unité de circuit interne (13) est configurée pour fonctionner lors de la réception d'une tension de diminution du régulateur (12).

2. Dispositif de source de puissance de radiosonde (6, 60) selon la revendication 1, dans lequel le circuit de source d'alimentation élévateur (11) est un convertisseur continu-continu non isolé qui comprend un transistor de commutation (22), une bobine d'arrêt (20), un condensateur (24) et une diode (21),
dans lequel le condensateur (24) est configuré pour être chargé par une tension obtenue en ajoutant la tension de pile sèche à la tension d'induction de la bobine d'arrêt (20),
dans lequel la diode (21) est connectée entre le condensateur (24) et la bobine d'arrêt (20) et configurée pour empêcher la tension avec laquelle le condensateur (24) est chargé de retourner vers la pile sèche (10),
dans lequel la pile sèche (10), le transistor de commutation (22) et le condensateur (24) sont connectés à un potentiel de référence commun,
dans lequel, lorsque le transistor de commutation (22) est mis à l'état passant, la bobine d'arrêt (20) produit une force électromotrice dans une direction de blocage du courant qui circule dans celle-ci, et
lorsque le transistor de commutation (22) est mis à l'état bloqué, la bobine d'arrêt (20) produit une force électromotrice dans une direction de maintien du courant.

3. Radiosonde (1) qui comprend : le dispositif de source de puissance de radiosonde (6, 60) selon la revendication 1 ; une unité de capteur (2, 2A, 2B) à laquelle le dispositif de source de puissance (6, 60) fournit la puissance et qui est configurée pour effectuer des observations météorologiques dans la haute atmosphère ;
un appareil (3, 5) qui est configuré pour traiter et transmettre les informations d'observation observées par l'unité de capteur (2, 2A, 2B) ; et un récipient qui loge le dispositif de source de puissance (6, 60) et l'appareil (3, 5) .
